# FASCICULE DE BREVET EUROPEEN

(11) **EP 1 240 041 B1**
(45) Date de publication et mention de la délivrance du brevet: **09.03.2005**
(21) Numéro de dépôt: 00993501.6
(22) Date de dépôt: 21.12.2000
(51) Int. Cl.: B60J 1/02, B60J 10/02

(54) **ASSEMBLAGE D'UNE VITRE DE VEHICULE A UN ELEMENT CONTIGU**
ANFÜGEN EINER AUTOSCHEIBE AN EIN ANSCHLUSSELEMENT
JOINING OF A VEHICLE PANE TO A CONTIGUOUS ELEMENT

(30) Priorité: 21.12.1999 DE 19961706
(43) Date de publication de la demande: 18.09.2002
(73) Titulaire: SAINT-GOBAIN GLASS FRANCE, 92400 Courbevoie (FR)
(72) Inventeur: CORNILS, Gerd, 52399 Merzenich-Ginbelsrath (DE); FISCHER, Florian, 52070 Aachen (DE); BEHREND, Ulrich, 52224 Stolberg/Gressenich (DE); ORTEN, Thomas, 52159 Roetgen (DE)
(74) Mandataire: Cardin, Elise
(86) Numéro de dépôt international: PCT/FR2000/003656
(87) Numéro de publication internationale: WO 2001/045974

(56) Documents cités:
- EP-A1- 0 401 091
- EP-A2- 0 163 195
- EP-A2- 0 490 092
- EP-A2- 0 611 672
- DE-A1- 3 606 810
- DE-A1- 3 702 555
- DE-A1- 3 821 457
- DE-A1- 3 843 079
- DE-U1- 8 707 322

## Description

L'invention se rapporte à un dispositif pour l'assemblage d'une vitre de véhicule avec un élément contigu, présentant les caractéristiques du préambule de la revendication 1.

On connaît des véhicules bien finis avec un jonc profilé recouvrant et obturant de façon étanche une fente entre l'arête inférieure de leur pare-brise et un élément contigu à celui-ci.

Dans le document DE 37 02 555 C2, on décrit une plaque de recouvrement pour recouvrir un joint entre un pare-brise collé et une pièce de carrosserie contiguë. La fixation de la plaque de recouvrement au pare-brise est effectuée en l'occurrence à l'aide d'un rail en U fixé à une arête du pare-brise, dans lequel la plaque de recouvrement s'engage. Du fait que les pièces de fixation sont assemblées à la plaque de recouvrement par une lamelle d'assemblage flexible de façon mobile sur au moins un côté par rapport à leur dimension transversale, il est nécessaire de compenser d'éventuelles tolérances et dilatations des matériaux.

Avec de tels joncs profilés en U, on fixe par exemple aussi au pare-brise un bac à eau recouvert par le capot du moteur, qui sert à l'évacuation de l'eau s'écoulant du pare-brise. Le jonc profilé en U entoure sur trois côtés l'arête inférieure de la vitre et est fixé par serrage ou par emboîtement. Sur son côté s'écartant de l'arête du verre est façonnée une rainure longitudinale, dans laquelle on peut insérer un rebord du bac à eau. Outre la transition étanche du pare-brise au bac à eau, on assure ainsi également un certain support réciproque. Afin de pouvoir reprendre les efforts élevés exercés lors de la fixation du bac à eau sur le pare-brise et pendant la marche du véhicule par suite de dilatations thermiques et de vibrations, le jonc profilé en U se compose d'un matériau relativement dur, en général du caoutchouc ou du plastique pourvu de renforts en acier. Le matériau dur a cependant le grand inconvénient que le jonc profilé en U ne peut pas suivre exactement le trajet courbe lors du montage sur l'arête de la vitre de véhicule cintrée en trois dimensions. Au contraire, le jonc profilé en U se tord, sa rainure longitudinale s'écarte alors de son trajet théorique de sorte que l'insertion du rebord du bac à eau est rendue très difficile et que la pose précise de l'arête du bac à eau sur l'arête de la vitre est rendue impossible. De même, en raison de variations inévitables des dimensions des vitres et des carrosseries, il est difficile de garantir toujours une tenue sûre du jonc profilé, qui est une pièce moulée préfabriquée, sur l'arête de la vitre. Il en résulte alors des efforts de maintien réduits et des fentes et des tolérances accrues.

On connaît différents procédés (DE 43 26 650 A1, DE 42 32 554 C1) pour munir une vitre d'un profilé périphérique extrudé, qui ne s'applique que sur une seule face principale et sur la face d'extrémité de la vitre. On peut réaliser ces profilés périphériques d'une façon telle qu'ils forment un prolongement de surface continu, situé dans le plan de la vitre, de la face principale non touchée de la vitre.

Par le document DE 43 26 650 A1, on connaît un procédé pour fabriquer une vitre pourvue d'un cadre surmoulé en un polymère. En l'occurrence, le cadre est surmoulé sur le bord de la vitre, avec une filière d'extrusion entourant la vitre et guidée le long du bord de la vitre par un manipulateur automatique, d'une façon telle que le cordon profilé soit déposé au moins sur une face principale et sur la face périphérique de la vitre. Pendant l'opération d'extrusion, la vitre est maintenue immobile à l'aide d'un dispositif de support correspondant à la forme de la vitre, de telle façon que le bord de la vitre déborde librement au-delà des faces d'appui du dispositif de support.

Le document DE 42 32 554 C1 décrit également un procédé pertinent, dans lequel la vitre est déposée sur un sommier moulé chauffé, qui s'applique sur la surface inférieure de la vitre dans la région du bord de celle-ci et dont la face moulée forme, au-delà de la face périphérique de la vitre, un prolongement de la surface de la vitre. A l'aide d'un manipulateur automatique télécommandé et d'une filière d'extrusion calibrée chauffée, on dépose sur le bord de la vitre un cordon profilé avec des dimensions extérieures définies, saillant au-delà de la face périphérique de la vitre. Le cordon profilé se compose d'un polymère thermoplastique et est fourni à la filière d'extrusion par une extrudeuse et un tuyau souple sous pression chauffé.

Dans le cas du premier procédé mentionné, la filière d'extrusion forme avec les deux faces principales de la vitre une section transversale de filière fermée, dans le second procédé la section transversale de filière fermée est formée par le sommier moulé, la surface librement accessible de la vitre et la filière d'extrusion. Les deux procédés se sont avérés adéquats pour la fabrication de vitres d'automobiles, qui sont prévues pour un montage par collage. Sur une partie du périmètre de la vitre ou sur tout le périmètre, on extrude un cadre ayant une section transversale essentiellement en L, qui est pourvu d'une lèvre d'étanchéité. La première branche du cadre en L recouvre la surface de la vitre tournée vers la bride de montage, la seconde branche forme le prolongement de la face périphérique. La lèvre d'étanchéité peut être façonnée aussi bien sur l'une que sur l'autre branche du cadre.

De tels profilés périphériques sont également réalisables à l'aide du procédé de moulage par injection largement utilisé, tel qu'il est décrit par exemple dans les documents EP 0 127 546 A1 et EP 0 145 443 B1. II a en outre été proposé de préfabriquer des profilés périphériques avec un procédé de moulage par injection et ensuite de les coller sur la vitre (EP 0 742 762 B1).

L'art antérieur connaît également du modèle d'utilité allemande N° DE-U-97 07 322.6 un dispositif d'assemblage à l'aide de deux cordons positionnés respectivement sur un panneau de toit et une ouverture de toit.

L'art antérieur connaît en outre de la demande de brevet allemand N° DE 37 02 555 A1 un dispositif d'assemblage correspondant sensiblement au préambule de la revendication 1.

L'invention a pour objet de proposer un dispositif perfectionné pour l'assemblage d'une vitre de véhicule à montage fixe avec un composant contigu à une arête de la vitre de véhicule, en particulier un bac à eau.

Conformément à l'invention, cet objectif est atteint par les caractéristiques de la revendication 1. Les caractéristiques des revendications secondaires portent sur des variantes avantageuses de cet objet.

L'invention réside donc dans le fait que la surface extérieure du cordon profilé collé sur la vitre de véhicule présente une lèvre qui forme un prolongement lisse et continu de la face principale extérieure libre de la vitre de véhicule. En même temps, il est prévu, sur la face inférieure de la lèvre, des moyens pour l'assemblage à un autre composant. Une telle configuration à surface continue permet par exemple d'amener les essuie-glaces dans leur position de repos au-dessus du bac à eau, sans que l'on doive prévoir des dispositifs coûteux pour soulever et déplacer les essuie-glaces au-dessus de protubérances éventuelles.

Un tel cordon profilé peut être fabriqué d'une manière particulièrement simple par extrusion d'un polymère, pour lequel un peut utiliser par exemple des systèmes de polyuréthane à un composant durcissant à l'humidité, des systèmes de polyuréthane à base de deux composants ou des élastomères thermoplastiques ou des oléfines. Pour extruder un cordon profilé formant un raccordement de surface continu, on peut par exemple employer une filière entourant l'arête de la vitre, qui est configurée de façon à délimiter, avec la vitre, la section transversale d'extrusion. Cela signifie que la filière doit présenter, sur les deux côtés de la vitre, des faces d'étanchéité qui glissent sur les faces principales de la vitre et assurent une bonne étanchéité de la section transversale de la filière par rapport aux surfaces du verre. La surface du verre ne doit naturellement pas être endommagée par ce glissement. Ceci est possible en utilisant des matériaux appropriés pour la filière, respectivement pour les faces d'étanchéité de la filière.

Pour doter la pièce profilée de régions présentant des propriétés différentes en une seule opération, on peut recourir au procédé dit de co-extrusion. En l'occurrence, au moins deux cordons profilés partiels sont réunis en un seul cordon profilé dans la filière d'extrusion. Les deux cordons profilés partiels se composent ainsi par exemple de deux matières plastiques différentes présentant des- duretés différentes. Il est cependant également possible de doter, par co-extrusion, un cordon profilé en un seul matériau polymère d'une région mousseuse par un moussage physique ou chimique. On peut ainsi d'une part respecter la condition d'un matériau de forme relativement stable pour la partie de la lèvre qui est assemblée à un autre composant, tandis que d'autre part la face inférieure du cordon profilé qui s'applique sur la carrosserie possède des propriétés de souplesse et d'élasticité pour la suppression du bruit et la compensation des tolérances.

Etant donné que l'on munit déjà largement des vitres de véhicule, prévues pour le collage dans une ouverture de carrosserie, d'un cadre ou d'une garniture étanche en polymère extrudé, le procédé d'extrusion est également recommandé pour la fabrication du cordon profilé destiné au dispositif d'assemblage conforme à l'invention. Les matériaux, les outils et les dispositifs existent déjà, de sorte que l'on peut mettre en oeuvre une production économique. Lorsque la vitre de véhicule est équipée d'un cadre ou d'une garniture étanche en polymère extrudé et d'une pièce profilée pour son assemblage à un composant contigu, la pièce profilée fait partie du cadre. La pièce profitée et le cadre peuvent être fabriqués en une seule opération avec des filières d'extrusion correspondantes, de même des zones de transition entre le début et la fin du cordon profilé extrudé peuvent être façonnées avec des procédés connus (DE 44 45 258 A1).

La pièce profilée peut cependant aussi être déposée par projection sur la vitre de façon connue en soi, en plaçant la vitre entre deux demi-moules, dans lesquels sont usinées des cavités de moulage correspondant à la forme de profilé désirée, et en remplissant les cavités, après la fermeture des demi-moules, avec un polymère thermoplastique fondu ou avec un système réactif de polymères. De la même manière, il est également possible de fabriquer uniquement la pièce profilée comme une pièce moulée par injection, et de la coller ensuite sur l'arête de la vitre.

D'une manière avantageuse, la pièce profilée est pourvue, sur sa face tournée vers la carrosserie, d'une région qui prend appui sur la carrosserie. De ce fait, non seulement la stabilité du dispositif d'assemblage est accrue, mais l'étanchéité entre la vitre de véhicule et la carrosserie peut également être améliorée. Ladite région peut par exemple se présenter sous la forme d'une lèvre élastique ou d'un bourrelet élastique saillant en mousse de polymère.

Il est souvent nécessaire que le composant soit assemblé de façon démontable avec la pièce profilée. L'entretien ou la réparation d'ensembles installés en dessous du composant, comme une batterie d'appoint ou le moteur des essuie-glaces, est ainsi possible. Un assemblage démontable fréquemment employé est l'assemblage par clipsage, dans lequel une pièce en forme de harpon, donc pourvue de crochets inversés, est introduite dans une rainure en contre-dépouille. Pour démonter cet assemblage, il faut soit exercer des efforts importants soit utiliser des outils spéciaux. D'autres assemblages démontables peuvent être réalisés avec une fermeture à crochets ou avec un assemblage collé désactivable. Les assemblages démontables peuvent s'étendre sur toute la longueur de la pièce profilée parallèlement à l'arête inférieure de la vitre. il est cependant également possible de disposer les éléments d'assemblage en plusieurs segments limités et espacés les uns des autres.

D'autres détails et avantages de l'objet de l'invention apparaîtront par les dessins d'un exemple de réalisation, sans aucune intention de limitation, ainsi que de leur description détaillée qui suit.

Dans ces dessins constituant des représentations schématiques :
- la figure 1 montre en coupe une vue latérale de la zone de transition d'un pare-brise de véhicule à un bac à eau prévu pour l'évacuation de l'eau; et
- la figure 2 illustre une seconde forme de réalisation avec un cordon profilé co-extrudé et un assemblage par clipsage au bac à eau.

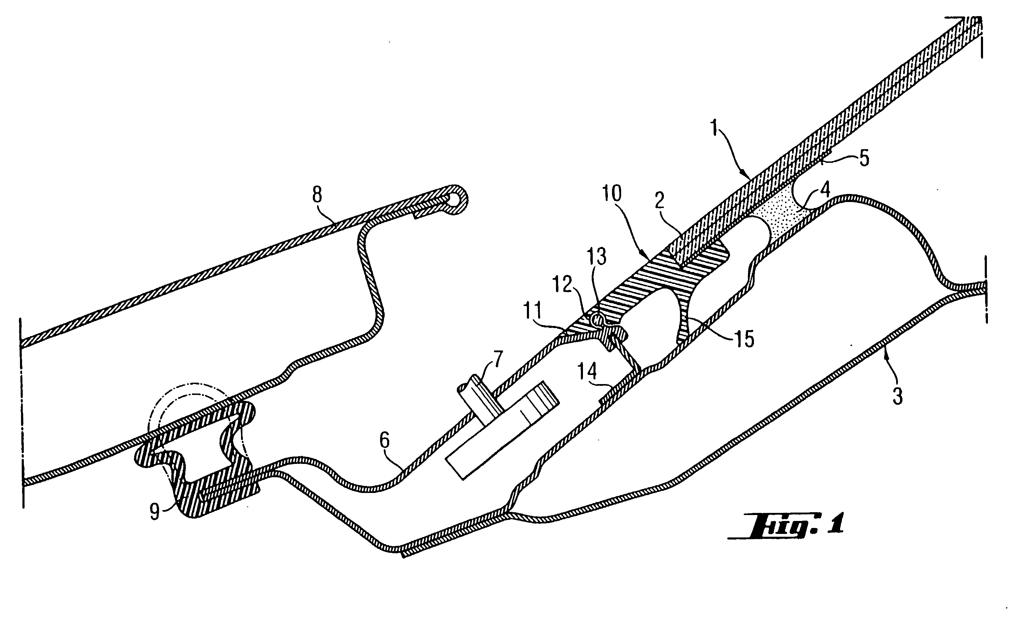

Dans la figure 1, un pare-brise 1 en verre feuilleté est solidement collé de façon connue par un cordon de colle 4 à une traverse 3 d'une carrosserie d'un véhicule non autrement représentée, dans la région de son arête inférieure 2. Un revêtement opaque en forme de cadre 5 en couleur céramique à cuire cache le cordon de colle 4 à la vue de l'extérieur et le protège contre l'action néfaste du rayonnement ultraviolet.

A l'arête inférieure 2 du pare-brise 1 se raccorde un bac à eau 6. Sa surface extérieure, sur laquelle s'évacue l'eau qui s'écoule du pare-brise 1, se trouve à fleur de la surface extérieure du pare-brise 1. A titre indicatif, on a représenté un axe d'essuie-glace 7 traversant le bac à eau, ainsi que l'extrémité du capot du moteur 8, qui recouvre le bac à eau 6 et l'axe d'essuie-glace 7. L'écoulement de l'eau depuis le bac à eau 6 vers le compartiment du moteur est empêché par une garniture d'étanchéité profilée à chambre creuse habituelle 9, qui est disposée entre la face inférieure du capot du moteur et la région du bord du bac à eau 6 dirigée vers le capot du moteur.

Sur l'arête inférieure 2 du pare-brise 1, on a extrudé de façon connue en soi un cordon profilé 10 d'une façon telle qu'il forme un prolongement lisse et continu de la face principale extérieure libre du pare-brise 1. La matière extrudée recouvre donc uniquement la face périphérique et la face principale intérieure du pare-brise 1. La face principale extérieure du pare-brise 1 est entièrement libre, la transition de l'arête du verre à la matière extrudée est complètement lisse. A la section transversale de contact essentiellement en forme de L du cordon profilé 10 se raccorde une lèvre 11, qui se prolonge jusqu'au bac à eau. La surface de la lèvre est entièrement lisse et forme également une transition lisse avec la face supérieure du bac à eau 6. Sur la face inférieure de la lèvre 11 est façonnée une rainure 12, dans laquelle est logée une nervure 13 formée sur le bac à eau 6. Sur le côté de la nervure 13 situé à l'opposé de la lèvre 11, il est prévu un profilé d'appui 14, qui supporte en plus le bac à eau 6 sur la traverse 3. Sur la face inférieure du cordon profilé 10 se trouve une lèvre d'appui extrudée 15, qui s'étend parallèlement à la rainure 12 et s'appuie sur la traverse 3. De ce fait, d'une part on accroît la stabilité des pièces assemblées les unes aux autres, pare-brise 1, bac à eau 6 et traverse 3, et d'autre part on assure une étanchéité améliorée de la fente entre le verre et la carrosserie.

Le cordon profilé 10 tout entier se compose de préférence d'un élastomère thermoplastique (TPE), pour lequel la dureté finale est, avec 40 à 90 Shore A, relativement basse par comparaison avec la matière du jonc profilé emboîté avec un renfort métallique mentionné dans l'introduction. Ainsi, on facilite aussi bien l'assemblage de la lèvre 11 avec le bac à eau 6 dans la région de la rainure 12 et de la nervure 13 que l'on évite aussi des bruits de grincement ou de cognement dus aux mouvements relatifs entre le pare-brise 1 et la traverse 3 ou le bac à eau 6.

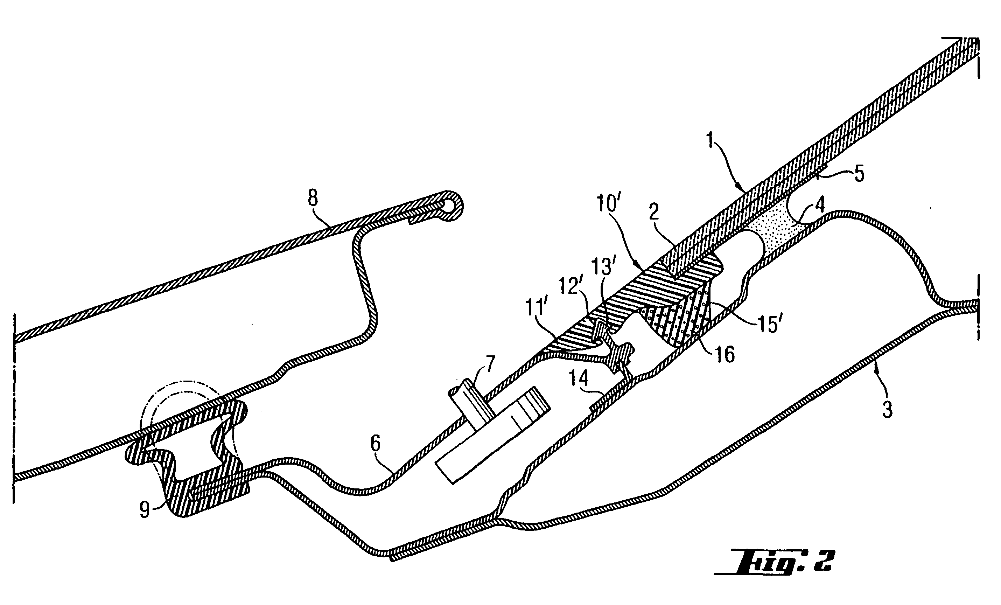

La figure 2 montre une autre forme de réalisation du dispositif d'assemblage décrit dans la figure 1, entre le pare-brise 1 et le bac à eau 6. Sur l'arête inférieure du pare-brise 1, on a extrudé un cordon profilé 10' qui forme à nouveau un prolongement lisse et continu de la face principale extérieure du pare-brise 1. Au cordon profilé 10' se raccorde une lèvre 11' se prolongeant jusqu'au bac à eau 6. Sur la face inférieure de la lèvre 11' est façonnée une rainure 12' en contre-dépouille, dans laquelle s'engage élastiquement un tenon 13' allongé en forme de harpon formé sur le bac à eau 6. L'assemblage par clipsage formé par la rainure en contre-dépouille 12' et le tenon en forme de harpon 13' est démontable. Sur la face inférieure du cordon profilé 10' est co-extrudé un bourrelet en mousse souple et élastique 15', qui s'étend parallèlement à la rainure 12' et s'appuie sur la traverse 3. La structure cellulaire du bourrelet 15' est obtenue pendant l'extrusion par le soufflage d'air, qui se rassemble sous forme de fines bulles 16 dans le polymère. Le bourrelet 15' augmente d'une part la stabilité des pièces assemblées les unes aux autres, pare-brise 1. bac à eau 6 et traverse 3, d'autre part il rend étanche la fente entre le verre et la carrosserie.

Il va de soi qu'un tel dispositif peut être utilisé non seulement pour un pare-brise, mais aussi pour une lunette arrière, dont le bord inférieur se place contre un bac à eau, qui est recouvert par un capot arrière correspondant et qui empêche la pénétration d'eau dans le coffre à bagages. De même, un tel dispositif n'est pas limité à un bac à eau, mais il peut aussi servir pour l'assemblage d'une vitre de véhicule avec un autre composant, par exemple pour l'assemblage d'une vitre latérale avec un recouvrement d'un cadre de porte.

## Revendications

1. Dispositif pour l'assemblage d'une vitre de véhicule à montage fixe (1), en particulier d'un pare-brise, avec un composant contigu à une arête de la vitre de véhicule, en particulier un bac à eau (6), au moyen d'une pièce profilée fixée à l'arête (2) de la vitre, **caractérisé en ce que** la pièce profilée est un cordon profilé (10, 10') adhérant à la vitre de véhicule, qui présente une lèvre (11, 11') se raccordant de façon lisse et continue à la face principale libre extérieure de la vitre de véhicule (1), et **en ce que** la lèvre (11, 11') présente sur sa face inférieure des moyens pour l'assemblage (12, 12', 13, 13') avec le composant (6).

2. Dispositif suivant la revendication 1, **caractérisé en ce que** la pièce profilée est un cordon profilé (10, 10') extrudé sur la vitre de véhicule.

3. Dispositif suivant la revendication 1, **caractérisé en ce que** la pièce profilée est un cordon profilé co-extrudé (10') à partir de deux matières plastiques de duretés différentes.

4. Dispositif suivant la revendication 1, **caractérisé en ce que** la pièce profilée est un cordon profilé co-extrudé (10',15') à partir de deux matières plastiques de densités différentes.

5. Dispositif suivant la revendication 1, **caractérisé en ce que** la pièce profilée est un cordon profité (10, 10') déposé par projection sur la vitre de véhicule (1).

6. Dispositif suivant la revendication 1, **caractérisé en ce que** la pièce profilée est un cordon profilé (10, 10') préfabriqué, moulé par injection et collé à la vitre de véhicule (1 ).

7. Dispositif suivant l'une quelconque des revendications précédentes, **caractérisé en ce que** le cordon profilé comprend, sur sa face tournée vers la carrosserie, une lèvre d'appui élastique (15), qui est supportée sur une pièce de carrosserie (3).

8. Dispositif suivant l'une quelconque des revendications précédentes, **caractérisé en ce que** le cordon profilé comprend un profilé élastique en mousse (15'), qui est supporté sur une pièce de carrosserie (3).

9. Dispositif suivant l'une quelconque des revendications précédentes, **caractérisé en ce que** le cordon profilé (10, 10') est assemblé de façon démontable avec le composant (6).

10. Dispositif suivant l'une quelconque des revendications précédentes, **caractérisé en ce que** le cordon profilé (10') est assemblé de façon démontable avec le composant (6) au moyen d'un dispositif de clipsage, se composant en particulier d'un couple composé d'une rainure en contre-dépouille (12') et d'un crochet inverse correspondant (13').

11. Dispositif suivant l'une quelconque des revendications précédentes, **caractérisé en ce que** le cordon profilé (10, 10') est assemblé de façon démontable avec le composant (6) au moyen d'une fermeture à crochets.

12. Dispositif suivant l'une quelconque des revendications précédentes, **caractérisé en ce que** le cordon profilé (10, 10') et le composant (6) sont collés l'un à l'autre de façon démontable.

## Patentansprüche

1. Anordnung zum Verbinden einer fest eingebauten Fahrzeugscheibe (1), insbesondere einer Windschutzscheibe, mit einem an einer Kante der Fahrzeugscheibe angrenzenden Bauteil, insbesondere einem Wasserkasten (6), mittels eines an der Scheibenkante (2) befestigten Profilteils, **dadurch gekennzeichnet, dass** das Profilteil ein an der Fahrzeugscheibe haftender Profilstrang (10, 10') ist, welcher eine glatt und flächenbündig an die freiliegende äußere Hauptfläche der Fahrzeugscheibe (1) anschließende Lippe (11, 11') aufweist, und dass die Lippe (11, 11') auf ihrer Unterseite Mittel zum Verbinden (12, 12', 13, 13') mit dem Bauteil (6) aufweist.

2. Anordnung nach Anspruch 1, **dadurch gekennzeichnet, dass** das Profilteil ein auf die Fahrzeugscheibe extrudierter Profilstrang (10, 10') ist.

3. Anordnung nach Anspruch 1, **dadurch gekennzeichnet, dass** das Profilteil ein koextrudierter Profilstrang (10') aus zwei Kunststoffen mit unterschiedlichen Härten ist.

4. Anordnung nach Anspruch 1, **dadurch gekennzeichnet, dass** das Profilteil ein koextrudierter Profilstrang (10', 15') aus zwei Kunststoffen mit unterschiedlichen Dichten ist.

5. Anordnung nach Anspruch 1, **dadurch gekennzeichnet, dass** das Profilteil ein an die Fahrzeugscheibe (1) angespritzter Profilstrang (10, 10') ist.

6. Anordnung nach Anspruch 1, **dadurch gekennzeichnet, dass** das Profilteil ein vorgefertigter, spritzgegossener und mit der Fahrzeugscheibe (1) verklebter Profilstrang (10, 10') ist.

7. Anordnung nach einem der vorhergehenden Ansprüche, **dadurch gekennzeichnet, dass** der Profilstrang auf seiner der Karosserie zugewandten Seite eine elastische Stützlippe (15) umfasst, welche auf einem Karosserieteil (3) abgestützt ist.

8. Anordnung nach einem der vorhergehenden Ansprüche, **dadurch gekennzeichnet, dass** der Profilstrang ein elastisches Schaumprofil (15') umfasst, welches auf einem Karosserieteil (3) abgestützt ist.

9. Anordnung nach einem der vorhergehenden Ansprüche, **dadurch gekennzeichnet, dass** der Profilstrang (10, 10') lösbar mit dem Bauteil (6) verbunden ist.

10. Anordnung nach einem der vorhergehenden Ansprüche, **dadurch gekennzeichnet, dass** der Profilstrang (10') mit dem Bauteil (6) über eine Clip-Anordnung, insbesondere bestehend aus einer Paarung aus hinterschnittener Nut (12') und entsprechendem Widerhaken (13'), lösbar verbunden ist.

11. Anordnung nach einem der vorhergehenden Ansprüche, **dadurch gekennzeichnet, dass** der Profilstrang (10, 10') mit dem Bauteil (6) über einen Klettverschluss lösbar verbunden ist.

12. Anordnung nach einem der vorhergehenden Ansprüche, **dadurch gekennzeichnet, dass** der Profilstrang (10, 10') und das Bauteil (6) lösbar miteinander verklebt sind.

## Claims

1. Device for connecting a fixed-mounting vehicle window (1), in particular a windscreen, to a component contiguous with one edge of the vehicle window, in particular a water tray (6), by means of a profiled piece fixed to the edge (2) of the window, **characterised in that** the profiled piece is a profiled bead (10, 10') adhering to the vehicle window, which has a lip (11, 11') connected smoothly and continuously to the external free main face of the vehicle window (1), and **in that** the lip (11, 11') has on its bottom face means for connection (12, 12', 13, 13') to the component (6).

2. Device according to Claim 1, **characterised in that** the profiled piece is a profiled bead (10, 10') extruded on the vehicle window.

3. Device according to Claim 1, **characterised in that** the profiled piece is a profiled bead (10') coextruded from two plastics materials with different hardnesses.

4. Device according to Claim 1, **characterised in that** the profiled piece is a profiled bead (10', 15') coextruded from two plastics materials with different densities.

5. Device according to Claim 1, **characterised in that** the profiled piece is a profiled bead (10, 10') deposited by spraying on the vehicle window (1).

6. Device according to Claim 1, **characterised in that** the profiled piece is a prefabricated profiled bead (10, 10'), moulded by injection and adhesively bonded to the vehicle window (1).

7. Device according to any one of the preceding claims, **characterised in that** the profiled bead comprises, on its face turned towards the bodywork, an elastic support lip (15) which is supported on a bodywork piece (3).

8. Device according to any one of the preceding claims, **characterised in that** the profiled bead comprises an elastic foam profile (15') which is supported on a bodywork piece (3).

9. Device according to any one of the preceding claims, **characterised in that** the profiled bead (10, 10') is connected removably to the component (6).

10. Device according to any one of the preceding claims, **characterised in that** the profiled bead (10') is connected removably to the component (6) by means of a clipping device, composed in particular of a pair composed of an undercut groove (12') and a corresponding reverse hook (13').

11. Device according to any one of the preceding claims, **characterised in that** the profiled bead (10, 10') is connected removably to the component (6) by means of a hook closure.

12. Device according to any one of the preceding claims, **characterised in that** the profiled bead (10, 10') and the component (6) are adhesively bonded to one another removably.
